Europäisches Patentamt

(19) European Patent Office

Office européen des brevets

(11) Numéro de publication: **0 024 229**

**B1**

## (12) FASCICULE DE BREVET EUROPEEN

(45) Date de publication du fascicule du brevet: **31.10.84**

(21) Numéro de dépôt: **80401134.4**

(22) Date de dépôt: **31.07.80**

(51) Int. Cl.³: **B 64 C 27/46**

(54) **Profil de pale pour voilure tournante d'aéronef.**

(30) Priorité: **10.08.79 FR 7920454**
**30.06.80 FR 8014511**

(43) Date de publication de la demande:
**25.02.81 Bulletin 81/08**

(45) Mention de la délivrance du brevet:
**31.10.84 Bulletin 84/44**

(84) Etats contractants désignés:
**DE GB IT NL SE**

(56) Documents cités:
**FR-A-2 153 253**
**FR-A-2 153 254**
**FR-A-2 159 422**
**FR-A-2 261 177**
**FR-A-2 408 518**
**GB-A- 615 318**
**US-A-2 257 260**
**US-A-2 464 726**

(73) Titulaire: **Société Nationale Industrielle**
**Aérospatiale Société anonyme dite:**
**37 Bld de Montmorency**
**F-75016 Paris (FR)**

(73) Titulaire: **Office National d'Etudes et de**
**Recherches Aerospatiales (O.N.E.R.A.)**
**29 Avenue de la Division Leclerc**
**F-92320 Chatillon sous Bagneux (FR)**

(72) Inventeur: **Gallot, Jacques René**
**Villa Asphodele Route Côte bleue**
**F-13690 Sausset Les Pins (FR)**
Inventeur: **Vingut, Georges Jean Henri**
**36, rue Dragon**
**F-13006 Marseille (FR)**
Inventeur: **Vincent de Paul, Michel**
**20 rue Lucas Championnière**
**Avilly St. Léonard F-60300 Senlis (FR)**
Inventeur: **Thibert, Jean-Jacques**
**1 Square des Erables**
**F-91370 Verriere-le Buisson (FR)**

(74) Mandataire: **Bonnetat, Christian**
**Cabinet PROPI Conseils 23 rue de Léningrad**
**F-75008 Paris (FR)**

Courier Press, Leamington Spa, England.

## Description

La présente invention se rapporte aux profils aérodynamiques utilisés pour la sustension des aéronefs à voilure tournante et, plus particulièrement, concerne une famille de profils pour pales de rotor d'hélicotère.

On sait que les pales pour rotor d'hélicoptère doivent être définies pour fonctionner dans plusieurs domaines de vol différents. On distingue en effet essentiellement: le vol stationnaire, le vol à grande vitesse et les évolutions.

Pour obtenir dans ces trois principaux domaines de vol des performances qui soient satisfaisantes, ii est nécessaire de faire un difficile compromis entre différents paramètres afin de définir un profil de pale qui soit suffisamment adapté pour ces domaines.

Par exemple, pour réduire la puissance absorbée par le rotor, en vol stationnaire, la finesse du profil doit être améliorée, alors que, pour réduire l'interaction due aux tourbillons de la pale précédente sur l'extrémité de la pale suivante, le niveau du coefficient de portance ($C_z$) au Mach de divergence de traînée doit être également amélioré.

De même, pour réduire la traînée importante due à la pâle avançante sur les appareils rapides, il est nécessaire d'augmenter la valeur du Mach de divergence de traînée.

Ces améliorations et cette augmentation du Mach de divergance de traînée doivent en outre intervenir pour une gamme du nombre de Mach, la plus grande possible, aussi bien en ce que concerne la vitesse de rotation du rotor, que la vitesse d'avancement de l'hélicoptère.

De plus, il existe pour les profils de pales d'hélicoptères un impératif qui est d'obtenir un coefficient $C_{m_0}$ de moment à portance nulle, le moins élevé possible, car celui-ci conditionne le niveau des efforts sur les biellettes de commande du pas des pales. Ainsi, un $C_{m_0}$ élevé favorise la naissance des vibrations, et agit sur la durée de vie de la chaîne de commande du rotor.

L'objet de la présente invention est donc de définir une famille de profils aérodynamiques pour pale de rotor d'hélicoptère, capables de très hautes performances à la fois en vol stationnaire et en vol à grande vitesse, sans pour autant altérer les performances de l'appareil en évolution.

La géomètrie particulière dudit profil, marquée notamment par la présence de nombreuses caractéristiques locales, confère une grande finesse à ce dernier et permet d'obtenir une valeur remarquable pour le Mach de divergence de traînée.

Ces profils, parfaitement adaptés pour fonctionner dans les domaines de vol précités, possèdent par ailleurs un coefficient de moment très faible, un coefficient de traînée très faible, et permettent la réalisation d'une pale dotée d'une excellente rigidité structurale.

A cette fin, selon l'invention, un profil de pale pour voilure tournante d'aéronef, comportant entre le bord d'attaque et le bord de fuite un extrados convexe et un intrados non concave, est caractérisé en ce que, au point de courbure maximale du bord d'attaque, le rayon de courbure Ro est approximativement défini par l'expression $Ro = 1,7 \ C.e_{max}^2$ dans laquelle C représente la corde et $e_{max}$ l'épaisseur maximale relative dudit profil, et en ce que la portion d'intrados voisine dudit bord d'attaque comporte une première zone d'intrados immédiatement adjacente au bord d'attaque et s'étendant au plus sur environ 5% de la corde C dans laquelle la courbure diminue rapidement en direction du bord de fuite de la valeur

$$\frac{1}{R_o}$$

à une valeur égale à environ

$$\frac{0,02}{R_o}$$

et une seconde zone d'intrados prolongeant la première et s'étendant jusqu'à environ 20 % de la corde à partir dudit bord d'attaque, cette seconde zone d'intrados présentant une courbure générale inférieure à la courbure la plus faible de ladite première zone et diminuant de façon continue en direction du bord de fuite jusqu'à un point de courbure minimale qui se trouve au viosinage de l'extrémité de ladite seconde zone.

Ainsi, on évite l'apparition d'une onde de choc intense dans la partie de l'intrados proche du bord d'attaque, ce qui empêche le décollement de la couche limite, de sorte que la coefficient de traînée est faible et que le Mach de divergence de traînée est élevé dans le cas de vol rapide.

On remarquera que le brevet FR—A—2 159 422 décrit un profil présentant des analogies avec le profil selon l'invention. Toutefois, ce document antérieur concerne une aile d'avion fixe et non pas une pale de voilure tournante pour hélicoptère. De plus, dans ce profil connu, l'evolution de la courbure d'intrados est moins rapide.

Si le profil est rapporté à un système d'axes orthogonaux OX, OY, dans lequel l'origine O est le point de courbure maximale du bord d'attaque, OX la corde du profil orientée du bord d'attaque vers le bord de fuite et OY un axe perpendiculaire à OX et orienté de l'intrados vers l'extrados, il est aventageux que ladite seconde zone d'intrados et, éventuellement une partie de la première, soient définies approximativement par une formule du type:

$$y = n_1 x^2 + n_2 x + n_3$$

dans laquelle $n_1$, $n_2$ et $n_3$ sont des coefficients constants et x et y les coordonnées rapportées à la longueur de la corde du profil. Dans le cas où l'épaisseur maximale relative est choisie égale à 0,09 alors que la corde C est choisie égale à l'unité de mesure, lesdits coefficients peuvent avoir les valeurs approximatives suivantes:

$$n_1 = 0,821393$$
$$n_2 = -0,284150$$
$$n_3 = -0,005602.$$

Avantageusement, la partie de l'extrados consécutive au bord d'attaque est définie approximativement par une formule de type:

$$y = p_1 x^2 + p_2 x + p_3.$$

Sur une longueur d'extrados correspondant au maximum à 20 % de la corde, les différents $p_i$ étant des coefficients constants et x et y les coordonnées rapportées à la longueur de la corde du profil. Dans le cas où l'épaisseur maximale relative est choisie égale à 0,09, alors que la corde C est choisie égale à l'unité de mesure, lesdits coefficients peuvent avoir les valeurs approximatives suivantes:

$$p_1 = -1,667230$$
$$p_2 = +0,596885$$
$$p_3 = 0,005873.$$

Pour des raisons de réglage local d'écoulement de l'air et de construction, le profil comporte un arêtier de bord de fuite intégré à la partie arrière, de longueur voisine de 5 % de la corde du profil, d'épaisseur au plus égale au dixième de sa longueur.

Pour pouvoir définir et engendrer facilement le profil conforme à l'invention, on peut utiliser un procédé consistant en ce que l'on établit un squelette continu, ou ligne moyenne, qui passe par le point de courbure maximale du bord d'attaque et par le bord de fuite du profil à construire et qui comporte d'une part, une première partie convexe vers l'extrados s'étendant entre ledit point de courbure maximale du bord d'attaque et le point dudit squelette le plus éloigné de la corde dudit profil, et, d'autre part, une seconde partie sensiblement rectiligne s'étendant approximativement dudit point le plus éloigné de la corde jusqu'au bord de fuite, en ce que l'on établit par ailleurs un profil biconvexe symétrique qui présente une corde identique à celle du profil à construire et dont l'épaisseur maximale relative se trouve environ au tiers de la corde et est comprise entre 6 at 13 % de la corde, après quoi, pour chaque point de la corde dudit profil biconvexe on mesure la distance des points d'intrados et d'extrados à ia corde et l'on reporte, en chaque point correspondant de la ligne moyenne du profil à construire, orthogonalement et de part et d'autre de celle-ci, la distance ainsi mesurée, de façon à obtenir le profil à constuire. Ce squelette étant rapporté au système d'axes mentionné précédemment, se première partie convexe peut être définie approximativement par une formule du type:

$$y = k_1 x^3 + k_2 x^2 + k_3 x + k_4 x^{1/2},$$

les différentes $k_1$ étant des coefficients constantes et x et y les coordonnées rapportées à la longueur de la corde du profil.

Si, la projection sur la corde du point du squelette le plus éloigné de la corde se trouve à 16 % de la corde en partant du point de courbure maximale du bord d'attaque, lesdits coefficients peuvent avoir les valeurs approximatives suivantes:

$$k_1 = 2,0327$$
$$k_2 = -1,1146$$
$$k_3 = 0,1826$$
$$k_3 = 0,0175.$$

Le profil biconvexe utilisé est avantageusement tel que sa partie d'intrados ou d'extrados comprise entre son bord d'attaque et son épaisseur maximale au maître couple, est approximativement définie par une relation de la forme suivante:

$$y = k_5 x^3 + k_6 x^2 + k_7 x + k_8 x^{1/2} + k_9$$

alors que la partie de l'intrados ou de l'extrados dudit profil biconvexe comprise entre ladite épaisseur maximale et son bord de fuite est approximativement définie par une relation de la forme

$$y = k_{10} x^2 + k_{11} x + k_{12}$$

les différents $k_i$ étant des coefficients constants et x et y les coordonnées rapportées à la longueur de la corde du profil.

Si l'épaisseur maximale dudit profil biconvexe est environ égale à 9 % de la corde, lesdits coefficients peuvent avoir les valeurs approximatives suivantes:

$$k_5 = -0,1172$$
$$k_6 = 0,0071$$
$$k_7 = -0,1068$$
$$k_8 = 0,1446$$
$$k_9 = 0,0006$$
$$k_{10} = -0,1153$$
$$k_{11} = 0,0844$$
$$k_{12} = 0,0295.$$

Ainsi, grâce à l'invention, on peut obtenir des voilures tournantes d'aéronefs particulièrement performantes. On remarquera qu'il n'est pas indispensable pour obtenir les effets favorables mentionnés, que la totalité de chaque pale d'une telle voilure tournante présente le profil selon l'invention. Le principal est que la section d'extrémité des pales ait ce profil. Par exemple, pour une voilure tournante ayant un rayon égal à R, il est généralement suffisant que la section d'extrémité de chaque pale comprise entre 0,75 R et 0,9 R soit conforme au profil de la famille décrit ci-dessus.

Cependant, selon une autre particularité de la présente invention, on peut obtenir des profils de la famille définie ci-dessus, qui, tout en conservant les qualités d'écoulement communes à la famille (c'est-à-dire pas de décollement de la couche limite, notamment à la partie inférieure du profil et pas d'onde de choc élevée), présentent soit un coefficient de portance $C_z$, soit un Mach de divergence de trainée $M_{DX}$, encore amélioré par rapport aux autres profils de la famille.

Aussi, selon un autre aspect de la présente invention, pour obtenir, par la mise en oeuvre du procédé décrit ci-dessus, un profil de la famille présentant un coefficient de portance amélioré, on choisit pour le squelette continue une courbe qui, rapportée au système d'axes défini ci-dessus, satisfait au moins approximativement aux équations suivantes:

— pour $0 \leqslant x \leqslant 0,32$

$$y = a_1\sqrt{x} + a_2 x + a_3 x^2 + a_4 x^3 + a_5 x^4,\ \text{avec}$$

$$a_1 = -0,024977$$
$$a_2 = 0,25251$$
$$a_3 = -0,41567$$
$$a_4 = -0,58234$$
$$a_5 = 1,7003$$

— et pour $0,32 \leqslant x \leqslant 1$

$$y = a_6 + a_7\sqrt{x} + a_8 x + a_9 x^2$$
$$+ a_{10}x^3 + a_{11}x^4 + a_{12}x^5 + a_{13}x^6$$
$$+ a_{14}x^7,\ \text{avec}$$

$$a_6 = -0,04993$$
$$a_7 = -0,16109$$
$$a_8 = 0,24674$$
$$a_9 = -0,071867$$
$$a_{10} = -0,3883$$
$$a_{11} = 0,47224$$
$$a_{12} = 0,010966$$
$$a_{13} = -0,38092$$
$$a_{14} = 0,22137$$

les coordonnées x et y étant rapportées à la longueur de la corde du profil, tandis que, pour le profil biconvexe symétrique, on choisit une épaisseur relative maximale $e_{max}$ voisine de 12%, ce profil biconvexe étant obtenu à partir du profil biconvexe d'épaisseur des ordonnées de ce demier profil par un rapport d'homothétie égal à

$$\frac{12}{9}.$$

Par ailleurs, selon encore un autre aspect de la présente invention, pour obtenir, par la mise en oeuvre du procédé décrit ci-dessus, un profil de la famille présentant un Mach de divergence trainée $M_{DX}$ amélioré, on choisit pour le squelette continue une courbe qui, rapportée au système d'axes défini ci-dessus, satisfait au moins approximativement aux équations suivantes:

— pour $0 \leqslant x \leqslant 0,24$

$$y = b_1\sqrt{x} + b_2 x + b_3 x^2 + b_4 x^3 + b_5 x^4,\ \text{avec}$$

$$b_1 = -0,013741$$
$$b_2 = 0,21824$$
$$b_3 = -1,4504$$
$$b_4 = 5,022$$
$$b_5 = -7,0651$$

— et pour $0,24 \leqslant x \leqslant 1$

$$y = b_6 + b_7\sqrt{x} + b_8 x + b_9 x^2 + b_{10}x^3 + b_{11}x^4,\ \text{avec}$$

$$b_6 = 0,012714 \qquad b_9 = 0,028575$$
$$b_7 = -0,004936 \qquad b_{10} = -0,060413$$
$$b_8 = -0,012855 \qquad b_{11} = 0,03702$$

les coordonnées x et y étant rapportées à la longueur de la corde du profil, tandis que, pour le profil biconvexe symétrique, on choisit une épaisseur relative maximale $e_{max}$ voisine de 6 %, ce profil biconvexe étant obtenu à partir du profil biconvexe d'épaisseur maximale de 9 % rappelé ci-dessus par multiplication des ordonnées de ce dernier profil par un rapport d'homothétie égal à

$$\frac{6}{9}.$$

Ainsi, ces trois profils de la famille présentant respectivement des épaisseurs maximales de 6 %, 9 % et 12 % sont obtenus à partir du même profil biconvexe de base (celui du profil à 9 %), qui, après adaptation à l'épaisseur maximale désirée, subit une transformation autour d'un squelette propre à chaque profil.

Cette particularité est spécialement intéressante, car il s'est révélé que, dans une voilure tournante de rayon R,:

— le profil à 9 % était particulièrement approprié à la réalisation de la section d'une pale comprise entre 0,75 R et 0,9 R à partir de l'axe de rotation de la voilure (comme indiqué dans le brevet principal)
— le profil à 12 %, à coefficient de portance $C_z$ amélioré, était particulièrement approprié à la réalisation de la section d'une pale comprise entre 0 et 0,75 R, c'est-à-dire à la réalisation de la partie d'emplanture de la pale, au voisinage des attaches de celle-ci au moyeu du rotor.

— le profil à 6 %, à Mach de divergence de trainée $M_{DX}$ amélioré, étain particulièrement

approprié à la réalisation de la section d'extrémité d'une pale, comprise entre 0,9 R et R.

Ainsi, il est possible de réaliser les trois sections d'une pale selon l'invention, présentant les particularités intéressantes décrites ci-dessus à partir du seul profil biconvexe à 9 %.

Par suite, pour ces profils d'emplanture (12 %) et d'extrémité (6 %), on conserve les mêmes caractéristiques géométriques essentielles (rayon du bord d'attaque, évolution de la courbure dans la zone d'intrados avant) et des lois de transformation semblables pour les profils bisconvexes, mais on utilise un squelette qui leur est propre.

Les figures du dessin annexé, qui représentent des exemples de l'invention, feront bien comprendre comment l'invention peut être réalisée.

La Figure 1 est une vue générale du profil selon l'invention, rapporté au systéme d'axes orthogonaux OX, OY, défini ci-dessus.

La Figure 2 montre schématiquement, à plus grande échelle, le squelette ou ligne moyenne du profil selon l'invention.

La Figure 3 montre un profil biconvexe symétrique à partir duquel on peut définir le profil selon l'invention, à l'aide du squelette de la Figure 2.

La Figure 4 est une vue agrandie de la région de bord d'attaque du profil de la Figure 1.

La Figure 5 est un diagramme illustratant l'évolution du rapport des pressions $P/P_{lo}$ ($P$=pression à la surface du profil au point d'abscisse X, $P_{lo}$=pression à l'infini amont) à l'intrados du profil selon l'invention pour deux nombres de Mach et pour un coefficient de portance voisin de zéro, ce diagramme mettant en évidence pour le Mach le plus élevé une zone d'écoulement supersonique entre le bord d'attaque et au plus 20 % de la corde, suivie d'une zone d'écoulement supersonique sans choc.

La Figure 6 est un diagramme illustrant l'évolution du rapport de pression $P/P_{lo}$ à l'extrados et à l'intrados pour un nombre de Mach à l'infini amont légèrement supérieur à 0,8 et un coefficient de portance voisin de zéro.

La Figure 7 est une vue agrandie de la région de bord de fuite du profil de la Figure 1.

La Figure 8 montre les squelettes de deux autres profils selon la présente invention.

La Figure 9 donne, pour un profil à 9 % d'épaisseur maximale et pour des profils à 6 % et 12 % d'épaisseur maximale, la variation du coefficient de portance $C_z$ en fonction de l'incidence $\alpha$.

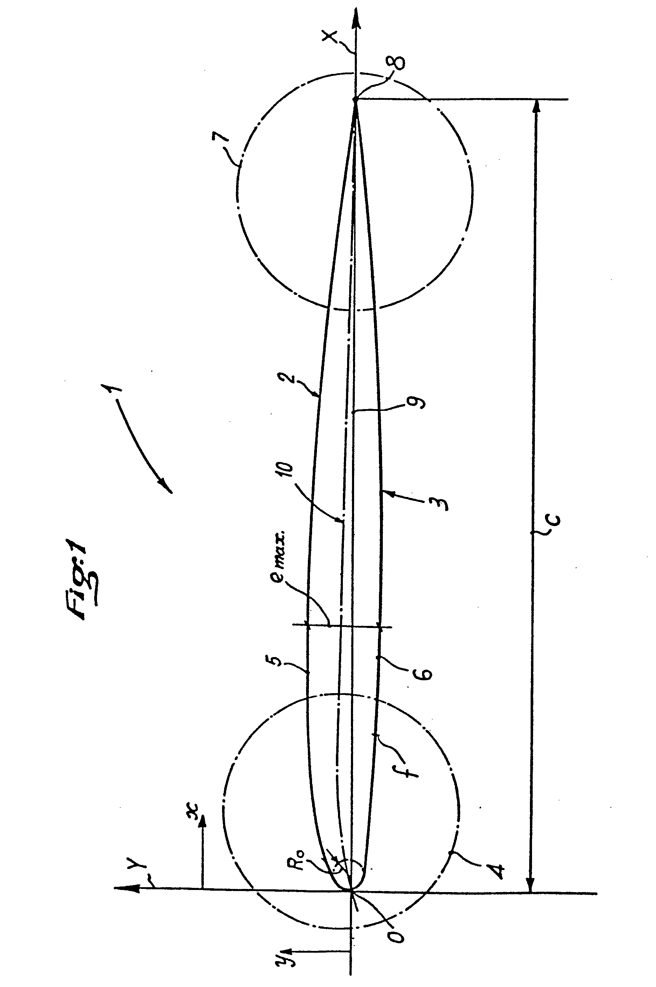

Comme montré par la Figure 1, un profil 1 selon l'invention, composé d'une partie supérieure 2 et d'une partie inférieure 3, comporte essentiellement une région de bord d'attaque 4 suivie d'une ligne d'extrados 5 et d'une ligne d'intrados 6, ces lignes définissant à la partie arrière du profil une région de bord de fuite 7.

Pour faciliter la description, le profil de la Figure 1 est rapporté à une système d'axes OX, OY, orthogonaux entre eux au point O, lequel est confondu avec le point de la région du bord d'attaque où le rayon de courbure est minimum.

L'axe OX, qui passe par le point du bord de fuite 8, est de plus confondu avec la corde 9 du profil.

Le système d'axes OX, OY, dont les sens positifs sont indiqués par les flèches données sur la Figure 1, sert de référence à des coordonnées réduites, c'est-à-dire à des abscisses x et à des ordonnées y, rapportées respectivement à la longueur C de la corde du profil. Par ailleurs, il est notamment considéré, pour déterminer le contour extérieur d'un profil, une ligne moyenne 10 ou squelette, passant par le point O et le point 8, laquelle représente le lieu géométrique des points équidistants des lignes 2 et 3.

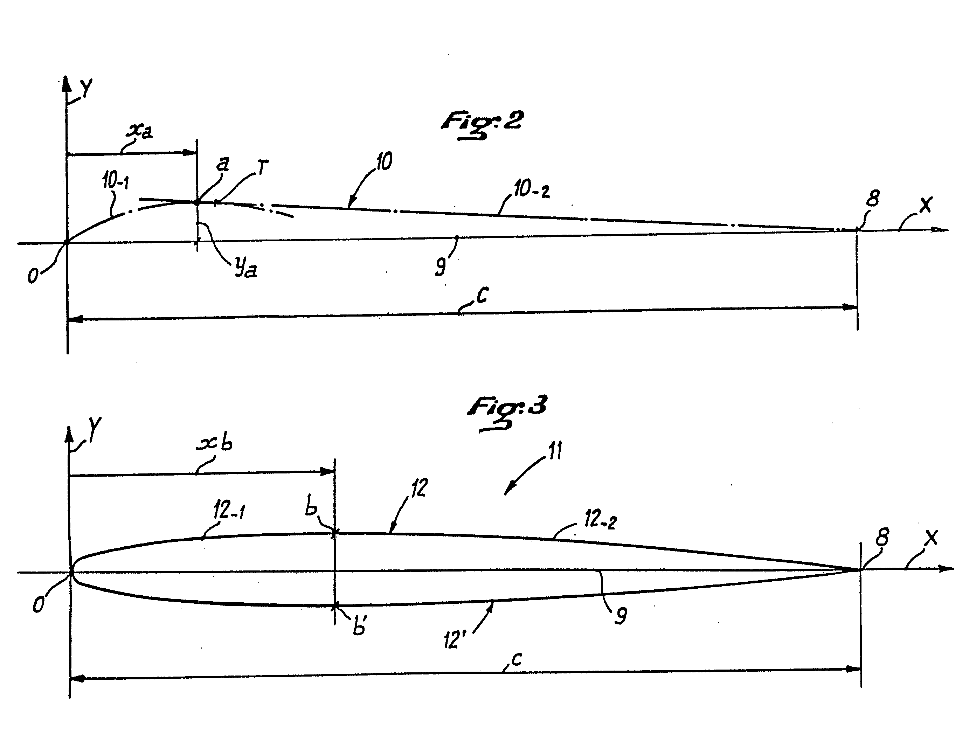

En effet, c'est par déformation d'un type de profil biconvexe symétrique, autour d'une ligne moyenne particulière, que l'on peut par exemple, définir un profil selon l'invention. Ainsi, la ligne moyenne 10, plus explicitement représentée sur la Figure 2, comporte essentiellement une ligne courbe 10-1 suivie d'une ligne quasi-rectiligne 10-2, ces lignes étant séparées l'une de l'autre, par un point a d'abscisse $x_a$ et d'ordonnée $y_a$, cette dernière valeur représentant la flèche maximale de la ligne 10.

De préférence, l'abscisse $x_a$ est comprise entre des limites égales au moins à 12 % de la longueur de la corde C du profil, et au plus à 20 % de la longueur de ladite corde, pour une valeur de flèche maximale $y_a$, égale dans tous les cas à environ 10 % de la valeur de l'abscisse $x_a$.

D'une manière générale, la ligne 10-1, comprise entre les points 0 et a, est définie approximativement par une équation (1) de la forme:

$$(1) \qquad y = k_1 x^3 + k_2 x^2 + k_3 x + k_4 x^{1/2}$$

expression dans laquelle les valeurs $k_1$, $k_2$, $k_3$ et $K_4$ représentent des constantes positives ou négatives, tandis que la ligne 10-2 qui passe par le point 8 est pratiquement rectiligne sur au moins les trois quarts de la distance séparant les points a et 8, ladite ligne 10-2 venant se raccorder tangentiellement à la ligne 10-1, en un point T, situé près et en arrière du point a (voir la Figure 2).

Selon une forme préférentielle de définition, établie pour une abscisse $x_a$ égale à 16 % de la longueur de la corde C, c'est-à-dire pour une flèche maximale $y_a$ égale à 1,6 % de C, l'allure générale de la ligne 10-1 est reproduite avec précision lorsque les coefficients de la relation (1) prennent les valeurs suivantes:

$$(2) \quad \begin{cases} k_1 = 2,0327 & k_2 = -1,1146 \\ k_3 = 0,1826 & k_4 = 0,0175 \end{cases}$$

A partir de cette définition particulière de la ligne 10-1, les autres définitions sont obtenues, par exemple, grâce à une homothétie entre les ordonnées, dont la valeur constante du rapport d'homothétie est égale à celle déterminée par le rapport des flèches maximales considérées, la ligne 10-2 venant dans tous les cas se raccorder tangentiellement dans la zone immédiatement située derrière le point a.

La Figure 3 montre un type de profil biconvexe symétrique 11 destiné à être déformé symétriquement de part et d'autre d'une ligne moyenne ou squelette.

Ce profil comprend une ligne supérieure 12 et une ligne inférieure 12' disposées symétriquement de chaque côté de l'axe OX et, dans le but de faciliter la description, admet la même corde 9 de longueur C que le profil représenté sur la Figure 1.

Le maître-couple du profil 11 représenté par le segment b-b' est par ailleurs situé à une abscisse $x_b$ égale au tiers de la corde C et la distance b-b' qui constitue en fait l'épaisseur maximale est au moins égale à 6 %, et au plus égale à 13 %, de la valeur de la corde dudit profil. La ligne supérieure 12 est composée d'une première ligne courbe 12-1 débutant au point 0 et s'arrêtant au point b, prolongée à partir du point b par une seconde ligne courbe 12-2 limitée vers l'arrière du profil par le bord de fuite 8.

Selon une forme préférentielle de définition admettant au tiers de la corde une épaisseur maximale de 9 %, la ligne 12-1 est principalement déterminée dans le système d'axes OX,, OY par la relation (3).

(3)     $y=k_5x^3+k_6x^2+k_7x+k_8x^{1/2}+k_9$

avec:

(4)     $\begin{cases} 0\leqslant x\leqslant 0,33 \\ k_5=-0,1172 \quad k_6= 0,0071 \\ k_7=-0,1068 \quad k_8= 0,1446 \\ k_9= 0,0006 \end{cases}$

tandis que la ligne 12-2 est principalement déterminée par la relation (5) suivante:

(5)     $y=k_{10}x^2+k_{11}x+k_{12}$

avec:

(6)     $\begin{cases} 0,33\leqslant x\leqslant 1 \\ k_{10}=-0,1153 \quad k_{11}=0,0844 \\ k_{12}= 0,0295 \end{cases}$

Les différentes relations mathématiques mentionnées ci-dessus, sont bien entendu valables pour une corde unitaire.

Par ailleurs, les définitions de profils symétriques ayant une épaisseur maximale comprise entre 6 et 13 % de la valeur de la corde sont obtenues, par exemple, en multipliant les ordonnées des lignes 12 et 12', précédemment décrites, par un rapport d'homothétie formé au numérateur par la valeur de l'épaisseur maximale considérée et au dénominateur par la valeur de référence de 0,09.

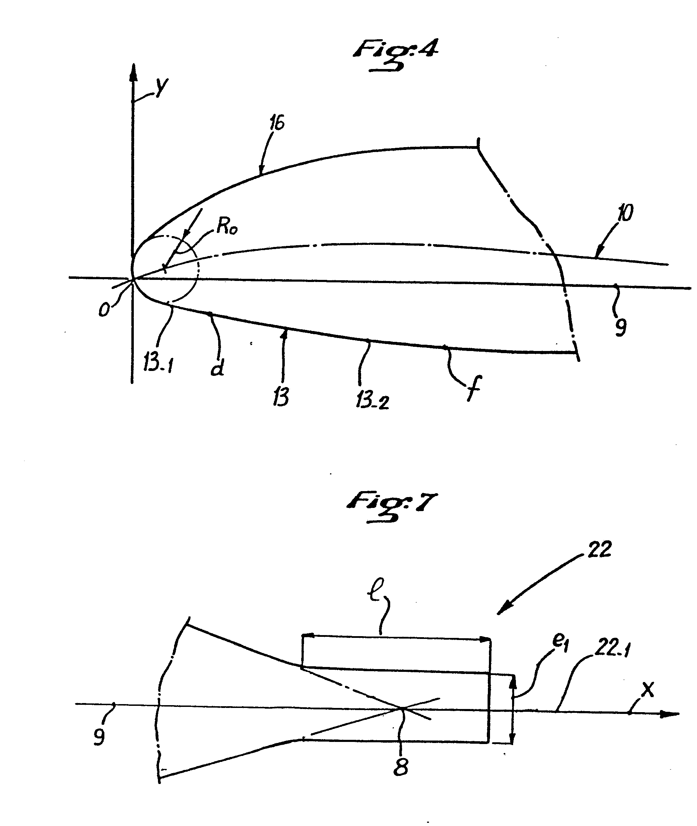

Ainsi, la déformation du profil biconvexe symétrique 11 autour de la ligne moyenne adéquate 10, permet de définir un profil présentant une évolution adéquate 10, permet de définir un profil présentant une évolution de courbure particulière dans une région d'intrados 13 du bord d'attaque (voir Figure 4). Cette évolution évite l'apparition d'une onde de choc intense dans cette partie de l'intrados ce qui supprime le décollement de la couche limite et permet d'obtenir pour le vol rapide un coefficient de traînée faible et un Mach de divergence de traînée élevé voisin de 0,85.

On rapellera que, par convention, le Mach de divergence de traînée est le nombre de Mach $M_{DX}$ où apparaît l'accroissement du coefficient de traînée $C_x$ et où la pente

$$\frac{\partial C_x}{\partial M}$$

de la relation $C_x=f(M)$ est égale à 0,1.

Ces remarquables résultats sont notamment obtenus par un rayon de courbure Ro, au bord d'attaque O égal environ à la valeur définie par l'expression:

(7)     $Ro=1,7\ C.e^2_{max},$

où C représente la corde et $e_{max}$ l'épaisseur maximale du profil (voir la Figure 1). Comme l'indique plus explicitement la Figure 4, la portion d'intrados 13 comprend essentiellement une ligne 13-1 et une ligne 13-2 séparées l'une de l'autre par un point désigné d.

La ligne 13-1, qui débute au point O et que de ce fait comporte une partie du cercle osculateur du bord d'attaque, possède une courbure qui diminue rapidement du point O vers le point d, d'une valeur de courbure

$$\frac{1}{R_o}$$

à une valeur égale à environ

$$\frac{0,02}{R_o},$$

calculée à l'aide de la formule

$$y=n_1x^2+n_2x+n_3,$$

dans laquelle
$n_2= 0,821393,$
$n_2=-0,284150$
et $n_3=-0,005602,$

ce point d étant situé, par rapport au point O, à une distance égale à environ cinq pour cent de la longueur de la corde C.

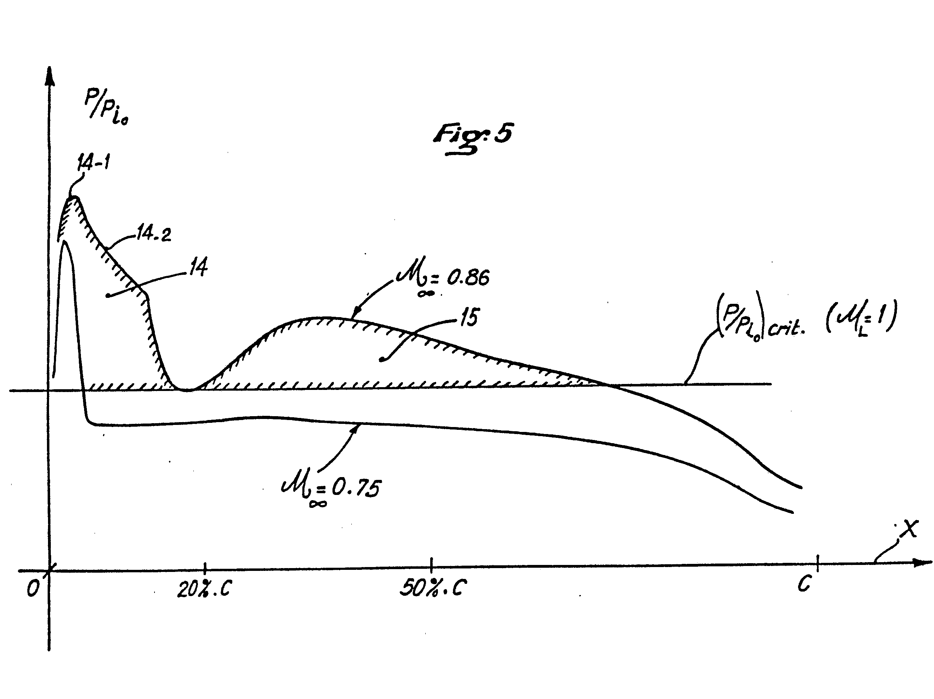

La ligne 13-2, délimitée par les points d et f, possède entre ces deux points une courbure générale très faible, laquelle diminue du point d au point f pour devenir minimale au point f. Le point f est situé à environ 20 % du bord d'attaque O et la portion de ligne à faible courbure comprise entre les points d et f représente en longueur environ 15 % de l'intrados. Grâce à ces caractéristiques géométriques, il est obtenu à l'intrados pour des nombres de Mach à l'infini amont compris entre 0,75 et 0,86, une zone supersonique 14, relativement stable avec un pic de survitesse 14-1 de faible niveau, lequel précède une forte recompression 14-2. De plus, la zone supersonique qui ne dépasse pas le point de courbure minimale f est suivie, pratiquement jusqu'à la moitié de la corde du profil, par une zone sonique sans choc 15 (voir la Figure 5).

Ce fonctionnement qui traduit un parfait contrôle de l'écoulement à la surface du profil dans cette région du bord d'attaque est avantageusement reproduit lorsqu'il est considéré d'une part, une ligne moyenne telle que définie par les relations (1) et (2) d'autre part le profil symétrique tel que défini par les relations (3), (4), (5) et (6).

Ainsi, l'application des relations préférentielles indiquées par les relations (1) à (6) permet par exemple, de définir une partie de la portion 13 à l'aide de l'expression résultante approchée suivante:

$$(8) \quad y = 0,821393\, x^2 - 0,284150\, x - 0,005602$$

le rayon du bord d'attaque étant pour une corde unitaire et une épaisseur minimale égale à 0,09, approximativement défini par application de la relation (7), c'est-à-dire environ égal à 0,014.

Le point de courbure minimale de l'intrados est situé à 20 % du bord d'attaque, et les mots "approximativement" et "environ" indiquent la précision de la définition obtenue est compatible avec les tolérances usuelles de fabrication.

De même, la portion d'extrados 16 située dans la région du bord d'attaque 4 (voir la Figure 4), est déterminée compte tenu des relations (1) à (6), par l'expression simplifiée suivante:

$$(9) \quad y = -1,667230\, x^2 + 0,596885 + 0,005873,$$

avec.    $0 \leqslant x \leqslant 0,17.$

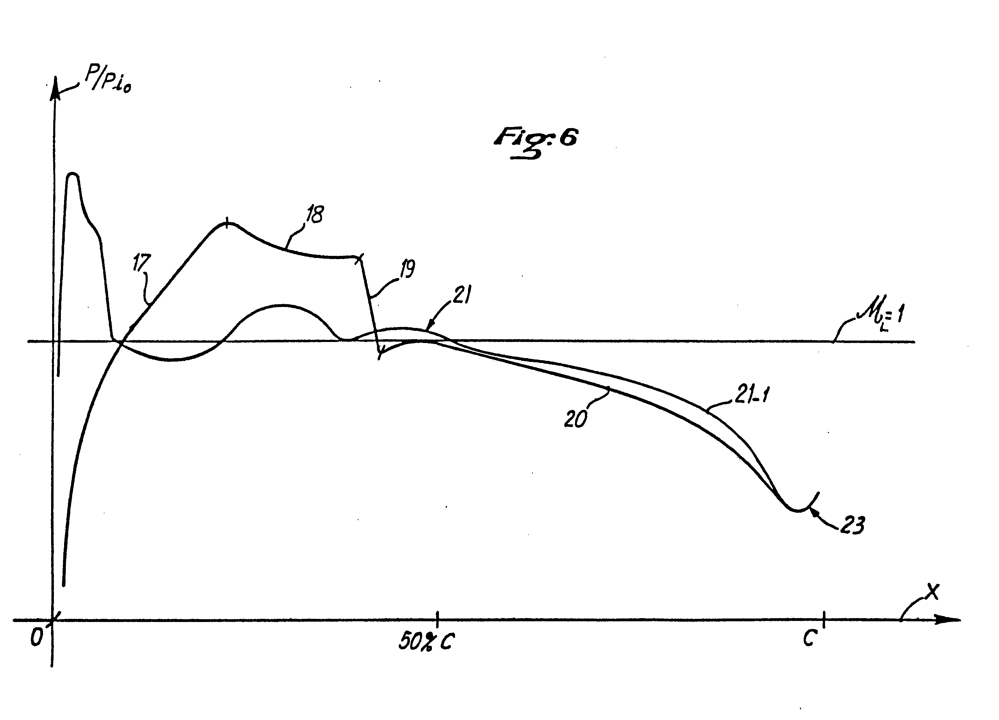

Comme le montre la Figure 6, l'utilisation d'un rayon de bord d'attaque tel que défini par la relation générale (7) et plus précisément la combinaison d'un rayon égal à environ 0,014 avec la relation (9) ci-dessus, permet d'obtenir une allure particulière de la répartition des pressions à l'extrados. Par exemple, pour un Mach à l'infini amont plus grand que 0,8 et un coefficient de portance Cz voisin de zéro, on constate une montée régulière de la ligne de survitesse qui devient maximale à environ 20 % de la longueur de la corde, puis, l'apparition d'une grande ligne de pré-compression lente et régulière 18, laquelle précède un choc modéré 19. Ainsi, la succession de ces lignes d'écoulement, combinée d'une part, avec une ligne de recompression convexe et régulière 20, et d'autre part, avec la répartition des pressions à l'intrados indiquée par la ligne 21, permet notamment d'obtenir un faible coefficient de traînée Cx et un Mach de divergence associé très élevé.

De plus, la distribution d'un profil symétrique autour d'une ligne moyenne quasi-rectiligne, placée dans la demi-corde arrière du profil, détermine des lignes de recompression 20 et 21-1 (voir la Figure 6) très proches l'une de l'autre, ce qui a pour effet essentiel de donner un coefficient de moment $C_{mo}$ pratiquement nul. Par ailleurs, pour augmenter la tenue du bord de fuite 8 et permettre l'ajustement éventuel du $C_{mo}$, il est avantageux de placer dans la zone du bord de fuite 7 (Figure 1) un arêtier ou languette de bord de fuite 22.

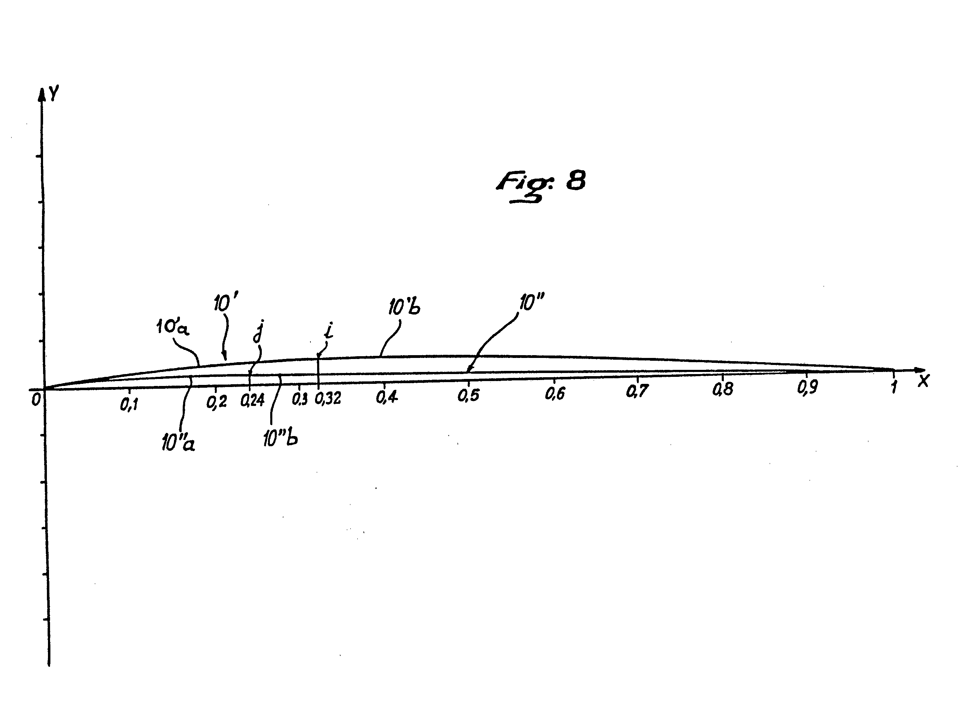

Comme le montre la Figure 7, l'arêtier de bord de fuite 22 a son axe de construction 22-1 aligné avec la corde 9 du profil.

Cette disposition de l'arêtier, laquelle permet de régler localement l'écoulement de l'air sur le profil, comme le montre par exemple la variation de pression 23 indiquée sur la Figure 6, a pour effet, dans certaines conditions de fonctionnement, de réduire la valeur du coefficient $C_{mo}$. De préférence, la longueur $l$ de l'arêtier est égale à 5 % de la corde du profil et son épaisseur $e_1$ est au plus égale au dixième de sa longueur.

Ainsi, grâce notamment à l'utilisation conjointe d'un rayon Ro particulier du bord d'attaque, d'une portion d'intrados particulière 13, d'une portion d'extrados 16 et d'une région de bord fuite 7 comprenant un arêtier 22, le profil selon l'invention est parfaitement adapté pour être utilisé dans une zone en extrémité de pale, située entre 0,75 R et 0,9 R, la lettre R désignant le rayon de la pale par rapport à l'axe du rotor (non representé).

Des essais comparatifs effectués dans les mêmes conditions, ont révélé, par rapport à un profil de référence classique NACA 0012 de remarquables résultats.

Par exemple, le coefficient de traînée Cx est diminué de près de 20 % alors que le Mach de divergence de traînée $M_{DX}$ est augmenté de l'ordre de 8 %.

De plus, le coefficient $C_{mo}$ reste, pour des nombres de Mach à l'infini amont égaux ou supérieurs à 0,8 pratiquement nul.

L'excellent compromis réalisée entre les différents paramètres de définition du profil assure de hautes performances en vol, notamment à grande vitesse et en vol stationnaire.

Le profil selon l'invention permet donc de définir une pale à haut rendement propulsif et porteur, applicable à tous types de rotors d'aéronefs, tels que les hélicoptères.

De plus, la présente invention permet d'obtenir des profils pour les portions de palé situées entre 0 et 0,75 R d'une part, et entre 0,9 R et R, d'autre part.

La Figure 8 montre, rapporté au système d'axes OX, OY, le squelette 10' d'un profil à coefficient de portance amélioré et le squelette 10'' d'un profil à Mach de divergence de traînée amélioré.

Le squelette 10' comporte deux parties 10'a et 10'b raccordées au point i, d'abscisse x=0,32.

La partie 10'a a pour équation

$$y = a_1\sqrt{x} + a_2x + a_3x^2 + a_4x^3 + a_5x^4, \text{ avec}$$

$$a_1 = -0,024977$$
$$a_2 = 0,25251$$
$$a_3 = -0,41567$$
$$a_4 = -0,58234$$
$$a_5 = 1,7003$$

tandis que la partie 10'b a pour équation

$$y = a_6 + a_7\sqrt{x} + a_8x + a_9x^2 + a_{10}x^3 + a_{11}x^4 + a_{12}x^5 + a_{13}x^6 + a_{14}x^7, \text{ avec}$$

$$a_6 = 0,04993$$
$$a_7 = -0,16019$$
$$a_8 = 0,24674$$
$$a_9 = -0,071867$$
$$a_{10} = -0,3883$$
$$a_{11} = 0,47224$$
$$a_{12} = 0,010966$$
$$a_{13} = 0,38092$$
$$a_{14} = 0,22137.$$

De même, le squelette 10'' comporte deux parties 10''a et 10''b, raccordées au point j, d'abscisse x=0,24.

La partie 10''a a pour équation

$$y = b_1\sqrt{x} + b_2x + b_3x^2 + b_4x^3 + b_5x^4, \text{ avec}$$

$$b_1 = -0,013741$$
$$b_2 = 0,21824$$
$$b_3 = -1,4504$$
$$b_4 = 5,022$$
$$b_5 = -7,0651$$

tandis que la partie 10''b a pour équation

$$y = b_6 + b_7\sqrt{x} + b_8x + b_9x^2 + b_{10}x^3 + b_{11}x^4 \text{ avec}$$

$$b_6 = 0,012714$$
$$b_7 = -0,004936$$
$$b_8 = -0,012855$$
$$b_9 = 0,028575$$
$$b_{10} = -0,060413$$
$$b_{11} = 0,03702.$$

Pour construire le profil symètrique biconvexe devant être associé au squelette 10', on prend le profil symétrique biconvexe d'épaisseur maximale de 9 % défini ci-dessus et on multiple les ordonnées de sa ligne d'intrados et de sa ligne d'extrados par le rapport

$$\frac{12}{9}.$$

On obtient donc un profil symètrique biconvexe d'épaisseur maximale de 12 %. Celui-ci est déformé autour du squelette 10' et l'on obtient un profil qui présente un coefficient de portance élevé.

De même, pour construire le profil symétrique biconvexe devant être associé au squelette 10'', on prend le profil symétrique biconvexe d'épaisseur maximale de 9 % défini ci-dessus et on multiple les ordonnées de sa ligne d'intrados et de sa ligne d'extrados par le rapport

$$\frac{6}{9}.$$

On obtient alors un profil symètrique biconvexe d'épaisseur maximale de 6 %. Celui-ci est déformé autour du squelette 10'' et on obtient un profil qui présente un Mach de divergence de traînée supérieur.

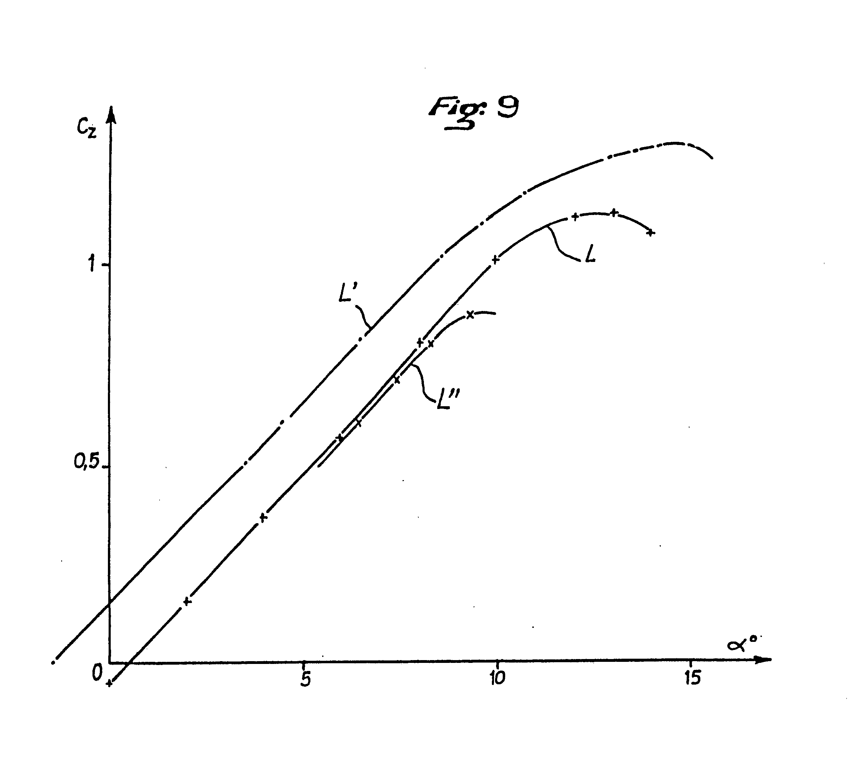

On a effectué des essais comparatifs, dans les mêmes conditions, entre ces nouveaux profils d'épaisseur maximale respective de 12 % et 6 % et celui d'épaisseur maximale de 9 % défini ci-dessus. Une partie des résultats obtenus est montrée par la Figure 9. Sur cette figure, les courbes L, L' et L'' représentent la variation du coefficient de portance $C_z$ en fonction de l'incidence $\alpha$ du profil, respectivement pour les profils à 9 %, 12 % et 6 % d'épaisseur maximale, pour un nombre de Mach voisin de 0,5.

La Figure 9 montre que, par rapport au profil à 9 % d'épaisseur maximale (courbe L), le profil à 12 % d'épaisseur maximale (courbe L') présente une forte augmentation du coefficient de portance. On peut voir que le coefficient de portance maximal présente une augmentation d'environ 15%. Cette augmentation se produit sans pratiquement changer le coefficient de moment $C_{mo}$, à portance quasiment nulle, du profil à 9% d'épaisseur maximale.

De plus, les essais ont montré que le coefficient de traînée $C_x$ du profil à 12% d'épaisseur maximale restait très faible.

En ce qui concerne le profil à 6% d'épaisseur maximale, les essais ont montré que, pour un coefficient de portance quasiment nul, son Mach de divergence de traînée est voisin de 0,91, alors qu'il est de 0,85 pour le profil à 9% d'épaisseur maximale, soit une augmentation de l'ordre de 7%.

De plus, comme le montre la Figure 9, le coefficient de portance maximal du profil à 6% d'épaisseur maximale est voisin de 1, c'est-à-dire présente pratiquement la même valeur que la coefficient de portance maximal obtenu à Mach 0,4 pour un profil NACA 0012 de référence, dont l'épaisseur est deux fois plus forte.

Ainsi, les profils à 12% et 6% d'épaisseur maximale sont particulièrement appropriés à réaliser les sections d'emplanture et d'extrémité de pale de voilure tournante dont la partie intermédiaire est constituée par le profil à 9% d'épaisseur maximale: en effet, on obtient dans la zone d'emplanture une augmentation du coefficient de portance sans modification sensible du coefficient de moment $C_{mo}$ à portance quasiment nulle, tandix que dans la zone mince d'extrémité on améliore la portance de la pale reculante et on évite l'apparition prématurée de la perte de portance, sans pour autant pénaliser la traînée de la pale, lorsque celle-ci est en position avançante.

**Revendications**

1. Profil de pale pour voilure tournante d'aéronef, comportant entre le bord d'attaque (0) et le bord de fuite (8) un extrados convexe (2) et un intrados non concave (3), caractérisé en ce que, au point (0) de courbure maximale du bord d'attaque, le rayon de courbure Ro est approximativement défini par l'expression $Ro=1{,}7\,C.e_{max}^2$ dans laquelle C représente la corde et $e_{max}$ l'épaisseur maximale relative dudit profil, et en ce que la portion d'intrados (13) voisine dudit bord d'attaque (0) comporte une première zone d'intrados (13-1) immédiatement adjacente au bord d'attaque (0) et s'étendant au plus sur environ 5% de la corde C dans laquelle la courbure diminue rapidement en direction du bord de fuite de la valeur

$$\frac{1}{Ro}$$

à une valeur égale à environ

$$\frac{0{,}02}{Ro}$$

et une seconde zone d'intrados (13-2) prolongeant la première et s'étendant jusqu'à environ 20% de la corde à partir dudit bord d'attaque (0), cette seconde zone d'intrados (13-2) présentant une courbure générale inférieure à la courbure la plus faible de ladite première zone et diminuant de façon continue en direction du bord de fuite (8) jusqu'à un point de courbure minimale $f$ qui se trouve au voisinage de l'extrémité de ladite seconde zone (13-2).

2. Profil de pale selon la revendication 1, rapporté à un système d'axes orthogonaux OX, OY, dans lequel l'origine O est le point de courbure maximale du bord d'attaque, OX la corde du profil orientée du bord d'attaque vers le bord de fuite et OY un axe perpendiculaire à OX et orienté de l'intrados vers l'extrados, caractérisé en ce que ladite seconde zone d'intrados (13-2) et, éventuellement une partie de la première (13-1), sont définies approximativement par une formule du type:

$$y=n_1x^2+n_2x+n_3$$

dans laquelle $n_1$, $n_2$, $n_3$, sont des coefficients constants et x et y les coordonnées rapportées à la longueur de la corde du profil.

3. Profil de pale selon la revendication 2, dans lequel l'épaisseur maximale relative est choisie égale à 0,09, alors que la corde C est choisie égale à l'unité de mesure, caractérisé en ce que lesdits coefficients ont les valeurs approximatives suivantes:

$$n_1=\ 0{,}821393$$
$$n_2=-0{,}284150$$
$$n_3=-0{,}005602.$$

4. Profil de pale selon l'une quelconque des revendications 1 à 3, rapporté à un système d'axes orthogonaux OX, OY, dans lequel l'origine O est le point de courbure maximale du bord d'attaque, OX la corde du profil orientée au bord d'attaque vers le bord de fuite et OY un axe perpendiculaire à OX et orienté de l'intrados vers l'extrados, caractérisé en ce que la partie de l'extrados (16) consécutive au bord d'attaque (4) est définie approximativement par une formule de type:

$$y=p_1x^2+p_2x+p_3$$

sur une longueur d'extrados correspondant au maximum à 20 % de la corde, les différents $p_1$ étant des coefficients constants et x et y les coordonées rapportées à la longueur de la corde du profil.

5. Profil de pale selon la revendication 4, dans lequel l'épaisseur maximale relative est choisie égale à 0,09, alors que la corde C est choisie égale à l'unité de mesure, caractérisé en ce que lesdits coefficients ont les valeurs approximatives suivantes:

$$P_1=-1{,}667230$$
$$P_2=\ 0{,}596885$$
$$P_3=\ 0{,}005873$$

avec $0\leqslant x\leqslant0{,}17$

6. Profil de pale selon l'une quelconque des revendications 1 à 5, caractérisé en ce qu'il comporte un arêtier de bord de fuite (22) de longueur voisine de 5% de la corde du profil, d'épaisseur au plus égale au dixième de sa longueur.

7. Profil de pale selon l'une quelconque des revendications 1 à 6, obtenu par la mise en oeuvre d'un procédé selon lequel on établit un squelette continu ou ligne moyenne (10), qui passe par le point de courbure maximale (0) du bord d'attaque (4) et par le bord de fuite (8) du profil à construire et qui comporte, d'une part, une première partie (10-1) convexe vers l'extrados s'étendant entre ledit point (0) de courbure maximale de bord d'attaque et le point (a) dudit squelette le plus éloigné de la corde (9) dudit profit et, d'autre part, une seconde partie (10-2) sensiblement rectiligne s'étendant approximativement dudit point (a) le plus éloigné de la corde jusqu'au bord de fuite (8), on établit par ailleurs un profil biconvexe symétrique (11) qui présente une corde (9) identique à celle du profil à construire et dont l'épaisseur maximale relative se trouve environ au tiers de ladite corde et est comprise entre 6 et 13 % de la corde, après quoi, pour chaque point de la corde dudit profil biconvenxe (11), on mesure la distance des points d'intrados (12') et d'extrados (12) à la corde et l'on reporte en chaque point correspondant de la ligne moyenne (10) du profil à construire orthogonalement et de part et d'autre de celle-ci, la distance ainsi mesurée, de façon à obtenir le profil à construire (1).

8. Profil de pale selon la revendication 7, rapporté à un système d'axes orthogonaux OX, OY, dans lequel l'origine O est le point de courbure maximale du bord d'attaque, OX la corde du profil orientée au bord d'attaque vers le bord de fuite et OY un axe perpendiculaire à OX et orienté par l'intrados vers l'extrados, caractérisé en ce que ladite première partie convexe (10-1) du squelette est définie approximativement par une formule du type

$$y=k_1x^3+k_2x^2+k_3x+k_4x^{1/2},$$

les différents $k_i$ étant des coefficients constants et x et y les coordonnées rapportées à la longueur de la corde du profil.

9. Profil de pale selon la revendication 8, dans lequel la projection sur la corde du point (a) du squelette (10) le plus éloigné de la corde se trouve à 16 % de la corde en partant du point de courbure maximale du bord d'attaque, caractérisé en ce que lesdits coefficients ont les valeurs au moins approximatives suivantes:

$$k_1= 2,0327$$
$$k_2=-1,1146$$
$$k_3= 0,1826$$
$$k_4= 0,0175.$$

10. Profil de pale selon la revendication 7, mettant en oeuvre un profil biconvexe (11) rapporté à un système d'axes orthogonaux OX, OY dans lequel l'origine O est le point de courbure maximale du bord d'attaque, OX, la corde du profil orientée du bord d'attaque vers le bord de fuite et OY un axe perpendiculaire à OX et orienté de l'intrados vers l'extrados, caractérisé en ce que la partie (12-1) de l'intrados ou de l'extrados dudit profil biconvexe (11) comprise entre le bord d'attaque O et l'épaisseur maximale, est approximativement définie par une relation de la forme:

$$y=k_5x^3+k_6x^2+k_7x+k_8x^{1/2}+k_9$$

alors que la partie (12-2) de l'intrados ou de l'extrados dudit profil biconvexe comprise entre l'épaisseur maximale et le bord de fuite (8) est approximativement définie par une relation de la forme

$$y=k_{10}x^2+k_{11}x+k_{12}$$

les différents $k_i$ étant des coefficients constants et x et y les coordonnées rapportées à la longueur de la corde du profil.

11. Profil de pale selon la revendication 10, dans lequel l'épaisseur maximale dudit profil biconvexe (11) est choisie environ égale à 9 % de la corde, caractérisé en ce que lesdits coefficients ont les valeurs approximatives suivantes:

$$k_5 =-0,1172$$
$$k_6 = 0,0071$$
$$k_7 =-0,1068$$
$$k_8 = 0,1446$$
$$k_9 = 0,0006$$
$$k_{10}=-0,1153$$
$$k_{11}= 0,0844$$
$$k_{12}= 0,0295.$$

12. Profil de pale selon la revendication 7, caractérisé en ce que, pour obtenir un profil présentant un grand coefficient de portance, on choisit pour le squelette continu (10) une courbe qui, rapportée à un système d'axes orthogonaux OX, OY, dans lequel l'origine O est le point de courbure maximale du bord d'attaque OX la corde du profil orientée du bord d'attaque vers le bord de fuite et OY un axe perpendiculaire à OX et orienté de l'intrados vers l'extrados, satisfait au moins approximativement aux équations suivantes:

— pour $0 \leqslant x \leqslant 0,32$

$$y=a_1\sqrt{x}+a_2x+a_3x^2+a_4x^3+a_5x^4, \text{ avec}$$

$$a_1=-0,024977$$
$$a_2= 0,25251$$
$$a_3=-0,41567$$
$$a_4=-0,58234$$
$$a_5= 1,7003$$

— et pour $0,32 \leqslant x \leqslant 1$

$$y=a_6+a_7\sqrt{x}+a_8x+a_9x^2+a_{10}x^3$$
$$+a_{11}x^4+a_{12}x^5+a_{13}x^6+a_{14}x^7, \text{ avec}$$

$$a_6 = 0,04993$$
$$a_7 = 0,16019$$
$$a_8 = 0,24674$$
$$a_9 =-0,071867$$
$$a_{10}=-0,3883$$
$$a_{11}= 0,47224$$

$a_{12} = 0,010966$
$a_{13} = -0,38092$
$a_{14} = 0,22137.$

les coordonnées x et y étant rapportées à la longueur de la corde du profil, tandis que, pour le profil biconvexe symétrique (11), on choisit une épaisseur relative maximale voisine de 12 %.

13. Profil selon la revendication 12, dans lequel le profil biconvexe symétrique (11) rapporté audit système d'axes est tel que la partie (12-1) de son intrados et de son extrados comprise entre le bord d'attaque et l'épaisseur maximale, est approximativement définie par une relation de la forme:

$$y = k'_5 x^3 + k'_6 x^2 + k'_7 x + k'_8 x^{1/2} + k'_9,$$

alors que la partie (12-2) de l'intrados et de l'extrados dudit profil biconvexe comprise entre l'épaisseur maximale et le bord de fuite est approximativement définie par une relation de la forme:

$$y = k'_{10} x^2 + k'_{11} x + k'_{12},$$

les différents $k'_i$ étant des coefficients constants et x et y les coordonnées rapportées à la longueur de la corde du profil, caractérisé en ce que lesdits coefficients ont les valeurs approximatives suivantes:

$$k'_5 = \frac{12}{9} \times (-0,1172)$$

$$k'_6 = \frac{12}{9} \times (0,0071)$$

$$k'_7 = \frac{12}{9} \times (-0,1068)$$

$$k'_8 = \frac{12}{9} \times (0,1446)$$

$$k'_9 = \frac{12}{9} \times (0,0006)$$

$$k'_{10} = \frac{12}{9} \times (-0,1153)$$

$$k'_{11} = \frac{12}{9} \times (0,0844)$$

$$k'_{12} = \frac{12}{9} \times (0,0295)$$

14. Profil de pale selon la revendication 7, caractérisé en ce que, pour obtenir un profil présentant un Mach de divergence de traînée important, on choisit pour le squelette continu (10) une courbe qui, rapportée à un système d'axes orthogonaux OX, OY, dans lequel l'origine O est le point de courbure maximale du bord d'attaque, OX la corde du profil orientée du bord d'attaque vers le bord de fuite et OY un axe perpendiculaire à OX et orienté de l'intrados vers l'extrados, satisfait ou moins approximativement aux équations suivantes:

— pour $0 \leqslant x \leqslant 0,24$

$$y = b_1 \sqrt{x} + b_2 x + b_3 x^2 + b_4 x^3 + b_5 x^4, \text{ avec}$$

$$b_1 = -0,013741$$
$$b_2 = 0,21824$$
$$b_3 = -1,4504$$
$$b_4 = 5,022$$
$$b_5 = -7,9651$$

— et pour $0,24 \leqslant x \leqslant 1$

$$y = b_6 + b_7 \sqrt{x} + b_8 x + b_9 x^2 + b_{10} x^3 + b_{11} x^4, \text{ avec}$$

$$b_6 = 0,012714$$
$$b_7 = -0,004936$$
$$b_8 = -0,012855$$
$$b_9 = 0,028575$$
$$b_{10} = -0,060413$$
$$b_{11} = 0,03702,$$

les coordonnées x et y étant rapportées à la longueur de la corde du profil, tandis que, pour le profil biconvexe symétrique (11), on choisit une épaisseur relative maximale voisine de 6 %.

15. Profil selon la revendication 14, dans lequel le profil biconvexe symétrique (11) rapporté audit système d'axes est tel que la-partie (12-1) de son intrados et de son extrados comprise entre le bord d'attaque et l'épaisseur maximale, est approximativement définie par une relation de la forme:

$$y = k''_5 x^3 + k''_6 x^2 + k''_7 x + k''_8 x^{1/2} + k''_9,$$

alors que la partie (12-2) de l'intrados et de l'extrados dudit profil biconvexe comprise entre l'épaisseur maximale et le bord de fuite est approximativement définie par une relation de la forme:

$$y = k''_{10} x^2 + k''_{11} x k''_{12},$$

les différents $k''_i$ étant des coefficients constants et x et y les coordonnées rapportées à la longueur de la corde du profil, caractérisé en ce que lesdits coefficients ont les valeurs approximatives

$$k''_5 = \frac{6}{9} \times (-0,1172)$$

$$k''_6 = \frac{6}{9} \times (0{,}0071)$$

$$k''_7 = \frac{6}{9} \times (-0{,}1068)$$

$$k''_8 = \frac{=6}{9} \times (0{,}1446)$$

$$k''_9 = \frac{6}{9} \times (0{,}0006)$$

$$k''_{10} = \frac{6}{9} \times (-0{,}1153)$$

$$k''_{11} = \frac{6}{9} \times (0{,}0844)$$

$$k''_{12} = \frac{6}{9} \times (0{,}0295)$$

16. Pale pour voilure tournante d'aéronef, caractérisée en ce que sa zone d'emplanture présente un profil conforme à celui de la revendication 13, en ce que sa zone d'extrémité libre présente un profil conforme à celui de la revendication 15 et en ce que sa zone intermédiaire présente un profil tel que celui spécifié par les revendications 3 et 5.

17. Pale selon la revendication 16, pour une voilure de rayon R, caractérisé en ce que sa zone d'emplanture s'étend depuis l'axe de rotation de la voilure jusqu'à 0,75 R, tandis que sa zone d'extrémité depuis 0,9 R jusqu'au bord libre extrême de la pale.

## Patentansprüche

1. Flügelblattprofil für Flugzeugrotoren mit einem zwischen der Flügelvorderkante (0) und der Flügelhinterkante (8) liegenden kovexen Flügeloberseite (2) und einer nichtkonkaven Flügelunterseite (3), dadurch gekennzeichnet, daß an der Stelle (0) der maximalen Krümmung der Flügelvorderkante der Krümmungsradius Ro annähernd bestimmt wird durch den Ausdruck Ro=1,7 C.e$^2_{max}$, wobei C die Sehne und e$_{max}$ die relative Maximaldicke des Profils darstellt, und daß der in der Nähe der Flügelvorderkante liegende Flügelunterseitenabschnitt einen ersten Unterseitenbereich (13-1), der unmittelbar neben der Flügelvorderkante (0) liegt und sich zumindest auf etwa 5% der Sehne C erstreckt, in der die Krümmung in Richtung auf die Flügelhinterkante von dem Wert

$$\frac{1}{Ro}$$

auf einen Wert von annähernd

$$\frac{0{,}02}{Ro}$$

abnimmt, und einen zweiten Unterseitenbereich (13-2) aufweist, der den ersten verlängert und sich bis etwa 20% der Sehne ausgehend von der Flügelvorderkante (0) erstreckt, wobei dieser zweite Bereich (13-2) eine Krümmung bietet, die allgemein unter der geringsten Krümmung des ersten Bereichs liegt und in Richtung der Flügelhinterkante (8) bis zu einem minimalen Krümmungspunkt $f$ kontinuierlich abnimmt, der in der Nähe des Endes des zweiten Bereichs liegt.

2. Blattprofil nach Anspruch 1, bezogen auf ein OX, OY-Koordinatensystem, bei dem O der Punkt maximaler Krümmung der Flügelvorderkante, OX die von der Vorderkante zur Hinterkante ausgerichteten Profilsehne und OY eine senkrecht zu OX verlaufende und von der Unterseite zur Oberseite des Flügels gerichteten Achse ist, dadurch gekennzeichnet, daß der zweite Bereich (13-2) und gegebenenfalls ein Teil des ersten Bereichs (13-1) annähend durch die Formel:

$$y = n_1 x^2 + n_2 x + n_3$$

bestimmt ist, in der $n_1$, $n_2$, $n_3$ konstante Koeffizienten und x und y die Koordinaten bezogen auf die Länge der Profilsehne sind.

3. Blattprofil nach Anspruch 2, bei dem die relative Maximaldicke mit 0,09 und dagegen die Sehne C gleich der Maßeinheit gewählt wird, dadurch gekennzeichnet, daß die Koeffizienten annähernd folgende Werte haben:

$$n_1 = 0{,}821393$$
$$n_2 = -0{,}284150$$
$$n_3 = -0{,}005602.$$

4. Blattprofil nach einem der Ansprüche 1 bis 3, bezogen auf ein OX, OY- Koordinatensystem mit O als Nullpunkt, der der maximale Krümmungspunkt der Vorderkante, OX die Sehne des Profils, die an der Vorderkante zur Hinterkante hin ausgerichtet ist, und OY eine Achse ist, die senkrecht auf OX steht und von der Unterseite zur Oberseite hin ausgerichtet ist, dadurch gekennzeichnet, daß der auf die Vorderkante (4) folgenden Abschnitt der Oberseite (16) annähernd bestimmt wird durch die Formel:

$$y = P_1 x^2 + P_2 x + P_3$$

und zwar auf einer Oberseitenlänge, die zumindest 20% der Sehne entspricht, wobei $P_i$ die konstanten Koeffizienten und x und y die auf die Länge der Sehne des Profils bezogenen Koordinaten sind.

5. Blattprofil nach Anspruch 4, bei dem die relative Maximaldicke gewählt wird mit 0,09 und dagegen die Sehne gleich der Maßeinheit, dadurch gekennzeichnet, daß die Koeffizienten folgenden Näherungswert haben:

$$P_1 = -1,667230$$
$$P_2 = 0,596885$$
$$P_3 = 0,005873$$

$$0 \leqslant x \leqslant 0,17$$

6. Blattprofil nach einem der Ansprüche 1 bis 5, dadurch gekennzeichnet, daß es einen Hinterkantensparren (22) mit einer Länge von annähernd 5% der Sehne des Profils aufweist, wobei deren Dicke zumindest gleich ist dem Zehntel seiner Länge.

7. Blattprofil nach einem der Ansprüche 1 bis 6, das gewonnen wird durch Einsetzen eines Verfahrens, nach dem eine kontinuierliche Skelett- oder Mittellinie (10) festgelegt wird, die durch den maximalen Krümmungspunkt der Vorderkante (4) und durch die Hinterkante (8) des zu konstruierenden Profils hindurchgeht und die einerseits einen ersten zur Oberseite hin konvexen Teil (10-1), der zwischen dem Punkt (o) der maximalen Vorderkantenkrümmung und dem Punkt (a) der Skelettlinie liegt, die von der Sehne (9) des Profils am weistesten entfernt ist, und andererseits einen zweiten allgemein rechtwindkeligen Teil (10-2) aufweist, der sich annähernd von der Sehne am weitesten entfernten Punkt (a) bis zur Hinterkante (8) erstreckt, und nach dem darüber hinaus ein symmetrisches bikonvexes Profil (11) geschaffen wird, das eine Sehne (9) bietet, die der des zu konstruierenden Profils gleicht und dessen relative Maximaldicke sich annähend am Drittel der Sehne befindet und von zwischen 6 bis 13 % der Sehne umfaßt wird, wonach für jeden Punkt der Sehne des bekonvexen Profils (11) die Entfernung von den Unter- und Oberseitenpunkten (12' bzw. 12) zur Sehne gemessen wird und die derart gemessene Entfernung an jedem Punkt, der der Mittellinie (10) des zu konstruierenden Profils entspricht, orthogonal und beiderseits davon aufgezeichnet, um das zu konstruierende Profil (1) zu schaffen.

8. Blattprofil nach Anspruch 7, bezogen auf ein OX, OY-Koordinatensystem, in dem der Nullpunkt O der Punkt maximaler Krümmung der Vorderkante, OX die der Vorderkante zur Hinterkante weisende Sehne des Profils und OY eine Achse ist, die auf OX senkrecht steht und von der Unterseite zur Oberseite weist, dadurch gekennzeichnet, daß der erste konvexe (10-1) Teil der Skelettlinie annähernd bestimmt wird durch die Formel:

$$y = k_1 x_3 + k_2 x^2 + k_3 x + k_4 x^{1/2},$$

wobei die verschiedenen $k_i$ die konstanten Koeffizienten und x und y die Koordinaten bezogen auf die Länge der Sehne des Profils sind.

9. Blattprofil nach Anspruch 8, bei dem die Projektion auf die Sehne von Punkt (a) der Skelettlinie (10), die sich von der Sehne am weitesten entfernt liegt, bei 16% der Sehne ausgehend vom maximalen Krümmungspunkt der Vorderkante liegt, dadurch gekennzeichnet, daß die Koeffizienten folgende zumindest approximativen Werte haben:

$$k_1 = 2,0327$$
$$k_2 = -1,1146$$
$$k_3 = 0,1826$$
$$k_4 = 0,0175.$$

10. Blattprofil nach Anspruch 7, nach dem ein bikonvexes Profil (11) benutzt wird, das bezogen ist auf ein OX, OY-Koordinatensystem, in dem O der Punkt maximaler Krümmung der Vorderkante, OX die von der Vorderkante zur Hinterkante weisende Sehne des Profils und OY eine senkrechte auf OX stehende und von der Unterseite zur Oberseite weisende Achse ist, dadurch gekennzeichnet, daß der Teil (12-1) der Unterseite oder der Oberseite des bikonvexen Profils (11), der zwischen der Vorderkante O und der maximalen Dicke liegt, annähernd durch folgende Beziehung bestimmt wird:

$$y = k_5 x^3 + k_6 x^2 + k_7 x + k_8 x^{1/2} + k_9$$

wogegen der Teil (12-2) der Unterseite oder der Oberseite des zwischen der maximalen Dicke und der Hinterkante (8) liegenden bikonvexen Profils annähernd durch folgende Beziehung bestimmt wird:

$$y = k_{10} x^2 + k_{11} x + k_{12}$$

wobei die verschiedenen $k_i$ die konstanten Koeffizienten und x und y die auf die Länge der Sehne des Profils bezogenen Koordinaten sind.

11. Blattprofil nach Anspruch 10, bei dem die maximale Dicke des bikonvexen Profils (L1) etwa mit 9% der Sehne gewählt wird, dadurch gekennzeichnet, daß die Koeffizienten folgende Annäherungswerte haben:

$$k_5 = -0,1172$$
$$k_6 = 0,0071$$
$$k_7 = -0,1068$$
$$k_8 = 0,1446$$
$$k_9 = 0,0006$$
$$k_{10} = -0,1153$$
$$k_{11} = 0,0844$$
$$k_{12} = 0,0295$$

12. Blattprofil nach Anspruch 7, dadurch gekennzeichnet, daß zum Erzielen eines Profils mit einem hohen Auftriebkoeffizienten für die kontinuierliche Skelettlinie (10) eine Kurve gewählt wird, die bezogen auf ein Koordinatensystem, in dem O der maximale Krümmungspunkt der Vorderkante, OX die von der Vorderkante zur Hinterkante weisende Sehne des Profils und Oy eine senkrecht auf OX stehende und von der Unterseite zur Oberseite weisende Achse ist, zumindest annähernd den folgenden Gleichungen genügt:

— für $0 \leqslant x \leqslant 0{,}32$

$$y = a_1\sqrt{x} + a_2 x + a_3 x^2 + a_4 x^3 + a_5 x^4, \quad \text{mit}$$

$$a_1 = -0{,}024977$$
$$a_2 = 0{,}25251$$
$$a_3 = -0{,}41567$$
$$a_4 = -0{,}58234$$
$$a_5 = 1{,}7003$$

— und für $0{,}32 \leqslant x \leqslant 1$

$$y = a_6 + a_7\sqrt{x} + a_8 x + a_9 x^2 + a_{10} x^3 + a_{11} x^4 + a_{12} x^5 + a_{13} x^6 + a_{14} x^7, \quad \text{mit}$$

$$a_6 = 0{,}04993$$
$$a_7 = 0{,}16019$$
$$a_8 = 0{,}24674$$
$$a_9 = -0{,}71867$$
$$a_{10} = -0{,}3883$$
$$a_{11} = 0{,}47224$$
$$a_{12} = 0{,}010966$$
$$a_{13} = -0{,}38092$$
$$a_{14} = 0{,}22137,$$

wobei die Koordinaten x und y bezogen sind auf die Länge der Sehne des Profils, während für das symmetrische bikonvexe Profil (11) eine relative Maximaldicke von annähernd 12% gewählt wird.

13. Blattprofil nach Anspruch 12, bei dem das symmetrische bikonvexe Profil (11) bezogen auf das Achsensystem derart ausgebildet ist, daß der Teil (12-1) seiner Unterseite und seiner Oberseite der zwischen der Vorderkante und der maximalen Dicke liegt, annähernd bestimmt wird durch folgende Beziehung:

$$y = k'_5 x^3 + k'_6 x^2 + k'_7 x + k'_7 x + k'_8 x^{1/2} + k'_9,$$

während der Teil (12-2) der Unterseite und der Oberseite des bikonvexen Profils, der zwischen der maximalen Dicke und der Hinterkante liegt, annähernd bestimmt wird durch folgende Beziehung:

$$y = k'_{10} x^2 + k'_{11} x + k'_{12},$$

wobei die verschiedenen $k'_i$ die konstanten Koeffizienten und x und y die Koordinaten bezogen auf die Länge der Sehne des Profils sind, dadurch gekennzeichnet, daß die Koeffizienten folgende Näherungswerte haben:

$$k'_5 = \frac{12}{9} x \, (-0{,}1172)$$

$$k'_6 = \frac{12}{9} x \, (0{,}0071)$$

$$k'_7 = \frac{12}{9} x \, (-0{,}1068)$$

$$k'_8 = \frac{12}{9} x \, (0{,}1446)$$

$$k'_9 = \frac{12}{9} x \, (0{,}0006)$$

$$k'_{10} = \frac{12}{9} x \, (-0{,}1153)$$

$$k'_{11} = \frac{12}{9} x \, (0{,}0844)$$

$$k'_{12} = \frac{12}{9} x \, (0{,}0295)$$

14. Blattprofil nach Anspruch 7, dadurch gekennzeichnet, daß zur Erzielung eines Profils, das ein sehr großes Maß Fahrwiderstandsabweichung bietet, für eine kontinuierliche Skelettlinie (10) eine Kurve gewählt wird, die, bezogen auf ein Koordinatensystem, bei dem O der maximale Krümmungspunkt der Vorderkante, OX die von der Vorderkante zur Hinterkante weisende Sehne des Profils und OY eine senkrecht auf OX stehende und von der Unterseite zur Oberseite weisende Achse ist, zumindest annähernd folgenden Gleichungen genügt:

— für $0 \leqslant x \leqslant 0{,}24$

$$y = b_1\sqrt{x} + b_2 x + b_3 x^2 + b_4 x^3 + b_5 x^4, \quad \text{mit}$$

$$b_1 = -0{,}013741$$
$$b_2 = 0{,}21824$$
$$b_3 = -1{,}4504$$
$$b_4 = 5{,}022$$
$$b_5 = -7{,}9651$$

— und für $0{,}24 \leqslant x \leqslant 1$

$$y = b_6 + b_7\sqrt{x} + b_8 x + b_9 x^2 + b_{10} x^3 + b_{11} x^4, \quad \text{mit}$$

$$b_6 = 0{,}012714$$
$$b_7 = -0{,}004936$$
$$b_8 = -0{,}012855$$
$$b_9 = 0{,}028575$$
$$b_{10} = -0{,}060413$$
$$b_{11} = 0{,}03702,$$

wobei die Koordinaten x und y bezogen sind auf die Länge der Sehne des Profils, während für das symmetrische bikonvexe Profil (11) eine relative Maximaldicke von etwa 6% gewählt wird.

15. Profil nach Anspruch 14, bei dem das symmetrische bikonvexe Profil (11) bezogen auf das Koordinatensystem derart beschaffen ist, daß de Teil (12-1) seiner Unterseite und seiner Oberseite, der zwischen der Vorderkante und der maximalen dicke liegt, annähernd bestimmt wird durch eine Beziehung der Form:

$$y = k''_5 x^3 + k''_6 x^2 + k''_7 x + k''_8 x^{1/2} + k''_9,$$

wogegen der Teil (12-2) der Unterseite und der Oberseite des bikonvexen Profils, der zwischen der maximalen Dicke und der Hinterkante liegt, annähernd bestimmt wird durch die Beziehung der Form:

$$y = k''_{10} x^2 + k''_{11} x k''_{12},$$

worin die verschiednen $k''_i$ konstante Koeffizienten und x und y die Koordinaten bezogen auf die Länge der Sehne des Profils sind, dadurch gekennzeichnet, daß die Koeffizienten folgende Näherungswerte haben:

$$k''_5 = \frac{6}{9} \times (-0,1172)$$

$$k''_6 = \frac{6}{9} \times (0,0071)$$

$$k''_7 = \frac{6}{9} \times (-0,1068)$$

$$k''_8 = \frac{6}{9} \times (0,1446)$$

$$k''_9 = \frac{6}{9} \times (0,0006)$$

$$k''_{10} = \frac{6}{9} \times (-0,1153)$$

$$k''_{11} = \frac{6}{9} \times (0,0844)$$

$$k''_{12} = \frac{6}{9} \times (0,0295)$$

16. Flügelblatt für Fleugzeugrotoren, dadurch gekennzeichnet, daß der Flügelwurzelbereich ein Profil bietet, das dem von Anspruch 13 entspricht, daß der freie Endbereich ein Profil bietet, das dem von Anspruch 15 entspricht, und daß der Zwischenbereich ein den Ansprüchen 3 und 5 festgelegtes Profil bietet.

17. Flügelblatt nach Anspruch 16 für ein Tragwerk mit Radius R, dadurch gekennzeichnet, daß der Flügelwurzelbereich sich von der Rotationsachse des Tragwerks bis zu 0,75 R erstreckt, wogegen der Endbereich sich von 0,9 R bis zur äußersten freien Kante des Flügelblattes erstreckt.

## Claims

1. A blade profile for rotary wing of an aircraft, comprising between the leading edge (0) and the trailing edge (8), a convex upper surface (2) and a non-concave lower surface (3), characterized in that at the point (0) of maximum curvature of the leading edge, the radius of curvature Ro is approximately defined by the expression $Ro = 1.7 \, C.e^2_{max}$, in which C represents the chord and $e_{max}$ the maximum relative thickness of said profile, that the portion of lower surface (13) adjacent said leading edge (0) comprises a first lower surface zone (13-1) immediately adjacent the leading edge (0) and extending at the most over 5% of the chord C, in which the curvature decreases rapidly in the direction of the trailing edge from the value

$$\frac{1}{Ro}$$

to a value equal to about

$$\frac{0,02}{Ro}$$

and a second lower surface zone (13-2) prolonging the first and extending up to about 20% of the chord from said leading edge (0), this second lower surface zone (13-2) having a general curvature inferior to the smallest curvature of said first zone and decreasing continuously in the direction of the trailing edge (8) up to a point of minimum curvature f which is located at the end of said second zone (13-2).

2. A blade profile as claimed in Claim 1, related to a system of orthogonal axes OX, OY in which the origin O is the point of maximum curvature of the leading edge, OX the chord of the profile oriented from the leading edge towards the trailing edge and OY an axis perpendicular to OX and oriented from the lower surface towards the upper surface, characterized in that said second lower surface zone (13-2) and possibly a part of the first (13-1) are defined approximately by a formula of type:

$$y = n_1 x^2 + n_2 x + n_3$$

in which $n_1$, $n_2$, $n_3$ are constant coefficients and x and y the coordinates related to the length of the chord of the profile.

3. A blade profile as claimed in Claim 2, in which the maximum relative thickness is chosen to be equal to 0,09, whilst the chord C is chosen to be equal to the unit of measurement, characterized in that said coefficients have the following approximate values:

$$n_1 = 0,821393$$
$$n_2 = -0,284150$$
$$n_3 = -0,005602.$$

4. A blade profile as claimed in anyone of Claims 1 to 3, related to a system of orthogonal axes OX, OY, in which the origin O is the point of maximum curvature of the leading edge, OX the chord of the profile oriented from the leading edge towards the trailing edge and OY an axis perpendicular to OX and oriented from the lower surface towards the upper surface, characterized in that the part of the upper surface (16) consecutive to the leading edge (4) is defined approximately by a formula of type:

$$y = p_1 x^2 + p_2 x + p_3$$

over a length of upper surface corresponding at maximum to 20 % of the chord, the different $p_i$ being constant coefficients and x and y the coordinates related to the length of the chord of the profile.

5. A blade profile as claimed in Claim 4, in which the relative maximum thickness is chosen to be equal to 0,09, whilst the chord C is chosen to be equal to the unit of measurement, characterized in that said coefficients have the following approximate values:

$$p_1 = -1,667230$$
$$p_2 = 0,596885$$
$$p_3 = 0,005873$$

with

$$0 \leqslant x \leqslant 0,17.$$

6. A blade profile as claimed in anyone of Claims 1 to 5, characterized in that it comprises a trailing edge ledge (22) whose length is close to 5 % of the chord of the profile, and whose thickness is at the most equal to one tenth of its length.

7. A blade profile as claimed in anyone of Claims 1 to 6, obtained by carrying out a process in which a continuous skeleton or mean line (10) is established, which passes through the point of maximum curvature (0) of the leading edge (4) and through the trailing edge (8) of the profile to be constructed and which comprises, on the hand, a first portion (10-1) convex towards the upper surface extending between said point (0) of maximum curvature of the leading edge and the point (a) of said skeleton most remote from the chord (9) of said profile, and, on the other hand, a second substantially rectilinear portion (10-2) extending approximately from said point (a) most remote from the chord up to the trailing edge (8), and a symmetrical biconvexe profile (11) is furthermore established which presents a chord (9) identical to that of the profile to be constructed and of which the maximum relative thickness is at about one third of said chord and is comprised between 6 and 13% of the chord, after which, for each point of the chord of said biconvex profile (11), the distance of the lower surface and upper surface points (12', 12) to the chord is measured and the distance thus measured is plotted at each corresponding point of the mean line (10) of the profile to be constructed at right angles and on either side of said line, so as to obtain the profile (11) to be constructed.

8. A blade profile as claimed in Claim 7, related to a system of orthogonal axes OX, OY in which the origin O is the point of maximum curvature of the leading edge, OX the chord of the profile oriented from the leading edge towards the trailing edge, and OY an axis perpendicular to OX and oriented from the lower surface to the upper surface, characterized in that said first convex portion (10-1) of the skeleton is defined approximately by a formula of type:

$$y = k_1 x^3 + k_2 x^2 + k_3 x + k_4 x^{1/2}$$

the different $k_i$ being constant coefficients and x and y the coordinates related to the length of the chord of the profile.

9. A blade profile as claimed in Claim 8, in which the projection on the chord of the point (a) of the skeleton (10) most remote from the chord is located at 16% of the chord starting from the point of maximum curvature of the leading edge, characterized in that said coefficients have the following at least approximate values:

$$k_1 = 2,0327$$
$$k_2 = -1,1146$$
$$k_3 = 0,1826$$
$$k_4 = 0,0175.$$

10. A blade profile as claimed in Claim 7, using a bi-convex profile (11) related to a system of orthogonal axes OX, OY, in which the origin O is the point of maximum curvature of the leading edge, OX, the chord of the profile oriented from the leading edge towards the trailing edge and OY an axis perpendicular to OX and oriented from the lower surface towards the upper surface, characterized in that the part (12) of the lower surface or of the upper surface of said biconvex profile (11) comprised between the leading edge (0) and the maximum thickness, is approximately defined by equation of the form:

$$y = k_5 x^3 + k_6 x^2 + k_7 x + k_8 x^{1/2} + k_9$$

whilst the part (12-2) of the lower surface or the upper surface of said biconvex profile between the maximum thickness and the trailing edge (8) is approximately defined by an equation of the form:

$$y=k_{10}x^2+k_{11}x+k_{12}$$

the different $k_i$ being constant coefficients and x and y the coordinates related to the length of the chord of the profile.

11. A blade profile as claimed in Claim 10, in which the maximum thickness of said biconvex profile (11) is chosen to be approximately equal to 9 % of the chord, characterized in that said coefficients have the following approximate values:

$$k_5 =-0,1172$$
$$k_6 = 0,0071$$
$$k_7 =-0,1068$$
$$k_8 = 0,1446$$
$$k_9 = 0,0006$$
$$k_{10}=-0,1153$$
$$k_{11}= 0,0844$$
$$k_{12}= 0,0295.$$

12. A blade profile as claimed in Claim 7, characterized in that, to obtain a profile having a high lift coefficient, a curve is chosen for the continuous skeleton (10) which, related to a system of orthogonal axes OX, OY, in which the origin O is the point of maximum curvature of the leading edge, OX the chord of the profile oriented from the leading edge towards the trailing edge and OY an axis perpendicular to OX and oriented from the lower surface towards the upper surface, satisfies at least approximately the following equations:

— for $0\leqslant x\leqslant 0,32$

$$y=a_1\sqrt{x}+a_2x+a_3x^2+a_4x^3+a_5x^4, \text{ with}$$

$$a_1=-0,024977$$
$$a_2= 0,25251$$
$$a_3=-0,41567$$
$$a_4=-0,58234$$
$$a_5= 1,7003$$

— and for $0,32\leqslant x\leqslant 1$

$$y=a_6+a_7\sqrt{x}+a_8x+a_9x^2+a_{10}x^3$$
$$+a_{11}x^4+a_{12}x^5+a_{13}x^6+a_{14}x^7, \text{ with}$$

$$a_6 = 0,04993$$
$$a_7 = 0,16019$$
$$a_8 = 0,24674$$
$$a_9 =-0,071867$$
$$a_{10}=-0,3883$$
$$a_{11}= 0,47224$$
$$a_{12}= 0,010966$$
$$a_{13}=-0,38092$$
$$a_{14}= 0,22137$$

the coordinates x and y being related to the length of the chord of the profile, whilst, for the symmetrical biconvex profile (11), a maximum relative thickness close to 12% is chosen.

13. A blade profile as claimed in Claim 12, in which the symmetrical biconvex profile (11) related to said system of axes is such that the part (12-1) of its lower surface and of its upper surface included between the leading edge and the maximum thickness is approximately defined by a relation of the form:

$$y=k'_5x^3+k'_6x^2+k'_7x+k'_8x^{1/2}+k'_9,$$

whilst the part (12-2) of the lower surface and the upper surface of said biconvex profile included between the maximum thickness and the trailing edge is approximately defined by a relation of the form:

$$y=k'_{10}x^2+k'_{11}x+k'_{12},$$

the different $k'_i$ being constant coefficients and x and y the coordinates related to the length of the chord of the profile, characterized in that said coefficients have the following approximate values:

$$k'_5=\frac{12}{9}\times(-0,1172)$$

$$k'_6=\frac{12}{9}\times(0,0071)$$

$$k'_7=\frac{12}{9}\times(-0,1068)$$

$$k'_8=\frac{12}{9}\times(0,1446)$$

$$k'_9=\frac{12}{9}\times(0,0006)$$

$$k'_{10}=\frac{12}{9}\times(-0,1153)$$

$$k'_{11}=\frac{12}{9}\times(0,0844)$$

$$k'_{12}=\frac{12}{9}\times(0,0295)$$

14. A blade profile as claimed in Claim 7, characterized in that, to obtain a profile having a high drag divergence Mach number, a curve is chosen for the continuous skeleton (10) which, related to a system of orthogonal axes OX, OY, in which the origin O is the point of maximum curvature of the leading edge, OX the chord of the profile oriented from the leading edge towards the trailing edge and OY an axis perpendicular to OX and oriented from the lower surface towards the upper surface, satisfies at least approximately the following equations:

— for $0 \leqslant x \leqslant 0,24$

$$y = b_1\sqrt{x} + b_2 x + b_3 x^2 + b_4 x^3 + b_5 x^4, \text{ with}$$

$$b_1 = -0,013741$$
$$b_2 = 0,21824$$
$$b_3 = -1,4504$$
$$b_4 = 5,022$$
$$b_5 = -7,9651$$

— and for $0,24 \leqslant x \leqslant 1$

$$y = b_6 + b_7\sqrt{x} + b_8 x + b_9 x^2 + b_{10} x^3 + b_{11} x^4, \text{ with}$$

$$b_6 = 0,012714$$
$$b_7 = -0,004936$$
$$b_8 = -0,012855$$
$$b_9 = 0,028575$$
$$b_{10} = -0,060413$$
$$b_{11} = 0,03702,$$

the coordinates x and y being related to the length of the chord of the profile, whilst, for the symmetrical biconvex profile (11), a relative maximum thickness close to 6 % is chosen.

15. A profile as claimed in Claim 14, in which the symmetrical biconvex profile (11) related to said system of axes is such that the part (12-1) of its lower surface and its upper surface included between the leading edge and the maximum thickness, is approximately defined by a relation of the form:

$$y = k''_5 x^3 + k''_6 x^2 + k''_7 x + k''_8 x^{1/2} + k''_9,$$

whilst the part (12-2) of the lower surface and the upper surface of said biconvex profile included between the maximum thickness and the trailing edge is approximately defined by a relation of the form:

$$y = k''_{10} x^2 + k''_{11} x k''_{12},$$

the different $k''_i$ being constant coefficients and x and y the coordinates related to the length of the chord of the profile, characterized in that said coefficients have the approximate values:

$$k''_5 = \frac{6}{9} \times (-0,1172)$$

$$k''_6 = \frac{6}{9} \times (0,0071)$$

$$k''_7 = \frac{6}{9} \times (-0,1068)$$

$$k''_8 = \frac{6}{9} \times (0,1446)$$

$$k''_9 = \frac{6}{9} \times (0,0006)$$

$$k''_{10} = \frac{6}{9} \times (-0,1153)$$

$$k''_{11} = \frac{6}{9} \times (0,0844)$$

$$k''_{12} = \frac{6}{9} \times (0,0295).$$

16. Blade for rotary wing aircraft, characterized in that its root zone has a profile in accordance with the one of Claim 13, that its free end zone has a profile in accordance with the one of Claim 15 and that its intermediate zone has a profile such as the one specified in Claims 3 and 5.

17. Blade as claimed in Claim 16, for a wing of radius R, characterized in that its root zone extends from the axis of rotation of the wing up to 0,75 R, whilst its end zone extends from 0,9 R up to the extreme free edge of the blade.

Fig.1

Fig:2

Fig:3

0 024 229

Fig. 4

Fig. 7

Fig. 5

0 024 229

*Fig: 6*

Fig. 8

Fig. 9

0 024 229